# EUROPÄISCHE PATENTSCHRIFT

(11) **EP 3 941 871 B1**
(45) Veröffentlichungstag und Bekanntmachung des Hinweises auf die Patenterteilung: **05.06.2024**
(21) Anmeldenummer: 20706758.8
(22) Anmeldetag: 03.03.2020
(51) Int. Cl.: B66B 1/34, B66B 5/00, G05B 19/042, G06F 8/656, G05B 9/02

(54) **SICHERHEITSGERÄT FÜR GEBÄUDEGEBUNDENE PERSONENBEFÖRDERUNGSANLAGE**
SAFETY DEVICE FOR BUILDING-CONNECTED PASSENGER TRANSPORT SYSTEM
APPAREIL DE SÉCURITÉ POUR UNE INSTALLATION DE TRANSPORT DES PERSONNES LIÉE AU BÂTIMENT

(30) Priorität: 18.03.2019 EP 19163412
(43) Veröffentlichungstag der Anmeldung: 26.01.2022
(73) Patentinhaber: INVENTIO AG, 6052 Hergiswil (CH)
(72) Erfinder: MICHEL, David, 6343 Rotkreuz (CH)
(74) Vertreter: Inventio AG
(86) Internationale Anmeldenummer: PCT/EP2020/055515
(87) Internationale Veröffentlichungsnummer: WO 2020/187554

(56) Entgegenhaltungen:
- EP-A1- 2 336 070
- WO-A1-2016/180484
- DE-A1-102016 200 711
- US-A1- 2011 302 466

## Beschreibung

Die vorliegende Erfindung betrifft ein Sicherheitsgerät für eine gebäudegebundene Personentransportanlage sowie ein Verfahren zum Aktualisieren von Software eines derartigen Sicherheitsgeräts.

Gebäudegebundene Personenbeförderungsanlagen, wie etwa Aufzüge, Fahrtreppen und Fahrsteige, dienen zum Befördern von Personen innerhalb von Gebäuden. Aufzuganlagen dienen beispielsweise dazu, Personen innerhalb eines Gebäudes zwischen verschiedenen Stockwerken zu befördern. Hierzu kann im Regelfall eine Aufzugskabine innerhalb eines meist vertikalen Aufzugschachts verlagert werden. Im Falle von Fahrtreppen oder Fahrsteigen können Personen auf Tritteinheiten stehend entlang von geneigten oder horizontalen Fahrwegen befördert werden.

Um die Sicherheit von Personen gewährleisten zu können, weisen viele gebäudegebundene Personenbeförderungsanlagen ein Sicherheitsgerät auf, das von sicherheitsrelevanten Sensoren Signale empfängt, diese auswertet und, falls ein nichtsicherer Zustand ermittelt wird, die gebäudegebundenen Personenbeförderungsanlagen stoppt, indem ein entsprechendes Signal an eine Steuerung der gebäudegebundenen Personenbeförderungsanlagen übermittelt wird. Beispielsweise sind an den Türen einer Aufzuganlage in der Regel Schalter angebracht, mit denen überprüft werden kann, ob die Türen geschlossen sind. Sind nicht alle Türen geschlossen, verhindert das Sicherheitsgerät, dass die Aufzugskabine im Schacht bewegt werden kann, beispielsweise um zu verhindern, dass Personen eingeklemmt werden oder in den Schacht fallen.

Da Sicherheitsgeräte in der Regel in grossen Stückzahlen verbaut werden, kann es wünschenswert sein, eine Software des Sicherheitsgeräts extern, beispielsweise über das Internet, aktualisieren zu können. Andererseits muss ein externes Interface vor unberechtigtem Zugriff geschützt werden. Bei Sicherheitsgeräten sollte aber die Komplexität möglichst klein gehalten werden, um sicherzugehen, dass die Sicherheitsfunktionen jederzeit und korrekt ausgeführt werden.

Die WO 2016/180484 A1 beschreibt ein Sicherheitsgerät für eine gebäudegebundene Personentransportanlage gemäß dem Oberbegriff des Anspruchs 1.

Insgesamt kann ein Bedarf für ein einfach aufgebautes Sicherheitsgerät mit einer gut geschützten Aktualisierungsfunktion bestehen.

Einem solchen Bedarf kann mit dem Gegenstand der unabhängigen Patentansprüche entsprochen werden. Vorteilhafte Ausführungsformen sind in den abhängigen Patentansprüchen sowie der nachfolgenden Beschreibung dargelegt.

Ein erster Aspekt der Erfindung betrifft ein Sicherheitsgerät für eine gebäudegebundene Personentransportanlage. Wie bereits gesagt, kann eine gebäudegebundene Personenbeförderungsanlage eine Aufzuganlage, eine Fahrtreppenanlage oder eine Fahrsteiganlage sein.

Gemäss einer Ausführungsform der Erfindung umfasst das Sicherheitsgerät einen Mikrocontroller mit einem Speicher, einem Prozessor und einer Kommunikationsschnittstelle. Ein Mikrocontroller kann einen Halbleiterchip umfassen, in dem die oben genannten Komponenten, d.h. der Speicher, der Prozessor und die Kommunikationsschnittstelle, realisiert sind.

In dem Speicher ist ein Sicherheitsmodul gespeichert, das, wenn es auf dem Prozessor ausgeführt wird, sicherheitsrelevante Signale von Komponenten der Personentransportanlage empfängt, diese hinsichtlich eines Sicherheitsproblems auswertet und im Falle eines Sicherheitsproblems ein Warnsignal an eine Steuerung der Personentransportanlage sendet. Das Sicherheitsmodul und im Allgemeinen Softwaremodule, wie das weiter unten beschriebene Aktualisierungsmodul, können Softwarekomponenten sein, die Instruktionen für den Prozessor enthalten. Beispielsweise können die Softwaremodule in einem nicht-flüchtigen Teil des Microcontrollers gespeichert sein.

Die sicherheitsrelevanten Signale können von Sicherheitssensoren der gebäudegebundenen Personentransportanlagen stammen und/oder können beispielsweise über einen Bus zu dem Sicherheitsgerät gesendet werden. Die Kommunikationsschnittstelle kann beispielsweise über diesen Bus kommunizieren. Sicherheitssensoren können im Allgemeinen alle Arten von Sensoren sein, die sicherheitsrelevante Informationen über Komponenten der gebäudegebundenen Personenbeförderungsanlage detektieren. Beispiele für derartige Sensoren sind Türschliesssensoren, die detektieren, ob eine Aufzugtür ordnungsgemäss geschlossen ist. Das Sicherheitsgerät kann direkt mit einer Steuerung der gebäudegebundenen Personenbeförderungsanlage verbunden sein, die beispielsweise einen Antrieb und/oder weitere Aktoren (wie etwa Türöffner) steuert. Wenn das Sicherheitsmodul ein Warnsignal abgibt, das beispielsweise über den Bus an die Steuerung gesandt werden kann, kann die Steuerung beispielsweise verhindern, dass der Antrieb und/oder die Aktoren betrieben werden.

Weiter ist in dem Speicher des Mikrocontrollers ein Aktualisierungsmodul gespeichert, das, wenn es auf dem Prozessor ausgeführt wird, ein Softwarepaket über die Kommunikationsschnittstelle empfängt und zumindest Teile des Sicherheitsmoduls mit dem Softwarepaket aktualisiert.

Die Kommunikationsschnittstelle kann beispielsweise über ein oder mehrere Datenkommunikationsgeräte, wie etwa einem Router, mit dem Internet verbunden sein. Über die Kommunikationsschnittstelle kann das Aktualisierungsmodul das Softwarepaket empfangen. Beim Empfang kann das Sicherheitsmodul überprüfen, ob der Bereitsteller bzw. Sender der Software der ist, der er vorgibt zu sein, und/oder kann das Softwarepaket entschlüsseln bzw. überprüfen, ob das Softwarepaket während seines Transports verfälscht wurde.

Der Mikrocontroller ist zusätzlich derart konfiguriert, dass das Sicherheitsmodul lediglich, also nur durch das Aktualisierungsmodul abänderbar ist. Auf diese Weise kann verhindert werden, dass ein ungewünschter Zugriff von aussen über die Kommunikationsschnittstelle auf das Sicherheitsmodul erfolgt. Das Sicherheitsmodul kann lediglich mittels des Aktualisierungsmoduls verändert werden, das überprüfen kann, ob die Änderungen, d.h. das empfangene Softwarepaket, von einer gewünschten Quelle stammt und ob es unkompromittierte Instruktionen enthält.

Der Prozessor weist einen ersten Prozessorkern, auf dem das Sicherheitsmodul ausgeführt wird und einen zweiten Prozessorkern auf, auf dem das Aktualisierungsmodul ausgeführt wird. Der Zugriff des zweiten Prozessorkerns ist dabei auf Bereiche des Speichers beschränkt, in denen das Sicherheitsmodul gespeichert. Der Mikrocontroller kann auch so konfiguriert sein, dass lediglich, also nur der zweite Prozessorkern auf den Bereich des Speichers zugreifen kann, in dem das Sicherheitsmodul gespeichert ist. Beispielsweise können die Prozessorkerne getrennte Speicher bzw. getrennte Speicherbereiche aufweisen.

Gemäss einer Ausführungsform der Erfindung umfasst der Mikrocontroller einen Hypervisor, der einen Zugriff von ausgeführten Softwaremodulen auf den Speicher beschränkt. Der Hypervisor kann einen Zugriff des Aktualisierungsmoduls auf Bereiche des Speichers beschränken, in denen das Sicherheitsmodul gespeichert ist. Der Hypervisor kann eine Hardware-Komponente des Mikrocontrollers sein und/oder kann ein Softwaremodul sein, das in dem Speicher gespeichert ist. Der Hypervisor regelt, welches Softwaremodul und/oder welcher Prozessorkern auf welche Speicherbereiche des Speichers zugreifen kann und auf welche nicht. Weiter kann der Hypervisor regeln, wie und ob Softwaremodule miteinander kommunizieren dürfen und/oder ob sie auf die Kommunikationsschnittstelle zugreifen dürfen.

Gemäss einer Ausführungsform der Erfindung ist der Hypervisor dazu ausgeführt, die sicherheitsrelevanten Signale von Komponenten der Personentransportanlage an das Sicherheitsmodul weiterzuleiten und das Softwarepaket an das Aktualisierungsmodul weiterzuleiten. Der Hypervisor kann die Datenkommunikation eines Softwaremoduls über die Kommunikationsschnittstelle überwachen. Bestimmte Daten (wie etwa das Softwarepaket und die zugehörige Kommunikation) werden zu dem Aktualisierungsmodul zugeordnet, während andere Daten (wie etwa die sicherheitsrelevanten Signale und das Warnsignal) dem Sicherheitsmodul zugeordnet werden. Auf diese Weise kann beispielsweise verhindert werden, dass das Aktualisierungsmodul ein Warnsignal erzeugt.

Gemäss einer Ausführungsform der Erfindung empfängt das Aktualisierungsmodul die sicherheitsrelevanten Signale über die Kommunikationsschnittstelle und leitet diese an das Sicherheitsmodul weiter. Der Mikrocontroller kann konfiguriert sein, dass lediglich, also nur das Aktualisierungsmodul über die Kommunikationsschnittstelle kommunizieren kann. Beispielsweise kann der Hypervisor eine Kommunikation zwischen dem Sicherheitsmodul bzw. einem Prozessorkern, auf dem das Sicherheitsmodul ausgeführt wird, und der Kommunikationsschnittstelle unterbinden.

Gemäss einer Ausführungsform der Erfindung sind in dem Speicher mehrere Sicherheitsmodule gespeichert, wobei das Aktualisierungsmodul dazu ausgeführt ist, diese Sicherheitsmodule zu aktualisieren. Es ist möglich, dass mit dem Mikrocontroller unterschiedliche Sicherheitsfunktionen mit unterschiedlichen Sicherheitsmodulen abgebildet werden. Dabei kann der Mikrocontroller so konfiguriert sein, dass die Sicherheitsmodule sich nicht untereinander beeinflussen können. Beispielsweise kann der Mikrocontroller so konfiguriert sein, dass jedem Sicherheitsmodul ein Speicherbereich zugeordnet ist, auf den die anderen Sicherheitsmodule nicht zugreifen dürfen. Auch kann der Mikrocontroller so konfiguriert sein, dass die Sicherheitsmodule nicht miteinander kommunizieren dürfen.

Gemäss einer Ausführungsform der Erfindung umfasst der Speicher einen nicht-flüchtigen Speicher und einen flüchtigen Speicher. Der nicht-flüchtige Speicher kann über die Kommunikationsschnittstelle nicht änderbar sein. In diesem nicht-flüchtigen Speicher, beispielsweise ein geschützter FLASH-Speicher, können Daten abgelegt sein, wie etwa die Aktualisierungsmodule, die davor geschützt sind, über einen unberechtigten Zugriff über die Kommunikationsschnittstelle verändert zu werden.

Gemäss einer Ausführungsform der Erfindung ist das Aktualisierungsmodul in dem nicht-flüchtigen Speicher in verschlüsselter Form gespeichert. Weiter kann in dem nicht-flüchtigen Speicher ein Bootloadermodul gespeichert sein, das, wenn es auf dem Prozessor ausgeführt wird, das Aktualisierungsmodul entschlüsselt und in den flüchtigen Speicher lädt.

Gemäss einer Ausführungsform der Erfindung ist ein privater Schlüssel für das Sicherheitsgerät in einem geschützten nicht-flüchtigen Speicher des Mikrocontrollers abgelegt. Auch ein öffentlicher Schlüssel eines Bereitstellers des Softwarepakets kann in einem geschützten nicht-flüchtigen Speicher des Mikrocontrollers abgelegt sein. Diese Schlüssel, die über die Kommunikationsschnittstelle nicht verändert werden können, können dazu verwendet werden, das verschlüsselte Aktualisierungsmodul und/oder ein verschlüsseltes Softwarepaket zu entschlüsseln. Der private Schlüssel kann eindeutig dem Sicherheitsgerät bzw. dem Aktualisierungsmodul zugeordnet sein. Mit dem öffentlichen Schlüssel kann der Bereitsteller eines Softwarepakets authentifiziert und/oder Daten für ihn verschlüsselt werden.

Gemäss einer Ausführungsform der Erfindung ist das Softwaremodul in unverschlüsselter Form in dem nicht-flüchtigen Speicher gespeichert. Da das Sicherheitsmodul durch unbefugte Zugriffe von aussen geschützt ist, kann darauf verzichtet werden, interne Datensicherheitsmassnahmen für die Sicherheitsmodule umzusetzen.

Ein zweiter Aspekt der Erfindung betrifft ein Verfahren zum Aktualisieren von Software eines Sicherheitsgeräts, so wie es oben stehend und unten stehend beschrieben ist. Beispielweise kann das Verfahren von dem oder den Prozessoren des Mikrocontrollers ausgeführt werden. Es ist zu verstehen, dass Merkmale des Verfahrens auch Merkmale des Sicherheitsgeräts sein können und umgekehrt.

Gemäss einer Ausführungsform der Erfindung umfasst das Verfahren: Authentisieren eines Bereitstellers des Softwarepakets über die Kommunikationsschnittstelle durch das Aktualisierungsmodul; Empfangen des Softwarepakets über die Kommunikationsschnittstelle durch das Aktualisierungsmodul; und Aktualisieren zumindest eines Teils des Sicherheitsmoduls mit dem Softwarepaket durch das Aktualisierungsmodul. Die Authentisierung kann mit einem öffentlichen Schlüssel des Bereitstellers erfolgen, der in dem Aktualisierungsmodul und/oder einem nicht-flüchtigen Speicher des Mikrocontrollers gespeichert ist.

Das Softwarepaket kann einen Header umfassen, der lediglich, also nur mit einem privaten, individuellen Schlüssel des Sicherheitsgeräts und/oder des Aktualisierungsmoduls entschlüsselt werden kann. Der private Schlüssel kann in dem Aktualisierungsmodul und/oder einem nicht-flüchtigen Speicher des Mikrocontrollers gespeichert sein. Der Header kann Informationen über den Inhalt eines weiteren Teils des Softwarepakets enthalten, das beispielsweise erst nach Empfangen des Headers vom Bereitsteller versendet werden kann.

Beispielsweise kann das Softwarepaket nur geänderte Bestandteile des zu aktualisierenden Sicherheitsmoduls umfassen und der Header kann darüber Auskunft geben, welche Teile des Sicherheitsmoduls ersetzt werden sollen.

Gemäss einer Ausführungsform der Erfindung umfasst das Verfahren weiter: Entschlüsseln des Softwarepakets durch das Aktualisierungsmodul. Auch das Softwarepaket kann mit dem privaten Schlüssel entschlüsselt werden. Es ist aber auch möglich, dass zumindest ein Teil des Softwarepakets mit der aktualisierten Software andersartig verschlüsselt ist.

Gemäss einer Ausführungsform der Erfindung ist das Softwarepaket oder zumindest ein Teil des Softwarepakets mit einem symmetrischen Verschlüsselungsverfahren, wie etwa im AES (Advanced Encryption Standard) definiert, verschlüsselt. Der temporäre Schlüssel für das symmetrische Verschlüsselungsverfahren kann mit Schlüsseln eines asymmetrischen Verschlüsselungsverfahrens, wie etwa dem oben genannten öffentlichen und privaten Schlüssel, ausgetauscht werden.

Gemäss einer Ausführungsform der Erfindung umfasst das Verfahren weiter: regelmässiges Anfragen nach einem Softwarepaket durch das Aktualisierungsmodul bei dem Bereitsteller. Die Aktualisierungssoftware kann die Aufgabe übernehmen, zu überprüfen, wann ein neues Softwarepaket vorliegt. Dazu kann beispielsweise eine in dem Aktualisierungsmodul und/oder in einem nicht-flüchtigen Speicher des Mikrocontrollers gespeicherte Adresse abgefragt werden.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale im Schutzumfang der beigefügten Ansprüche in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt schematisch eine gebäudegebundene Personenbeförderungsanlage in der Form einer Aufzuganlage mit einem Sicherheitsgerät gemäss einer Ausführungsform der Erfindung.
Fig. 2 zeigt ein Sicherheitsgerät gemäss einer Ausführungsform der Erfindung.
Fig. 3 zeigt ein Sicherheitsgerät gemäss einer weiteren Ausführungsform der Erfindung.
Fig. 4 zeigt einen Mikrocontroller für ein Sicherheitsgerät gemäss einer weiteren Ausführungsform der Erfindung.
Fig. 5 zeigt einen Mikrocontroller für ein Sicherheitsgerät gemäss einer weiteren Ausführungsform der Erfindung.
Fig. 6 zeigt ein Flussdiagramm für ein Verfahren zum Aktualisieren von Software eines Sicherheitsgeräts gemäss einer Ausführungsform der Erfindung.

Die Figuren sind lediglich schematisch und nicht massstabsgetreu. Gleiche Bezugszeichen bezeichnen in den verschiedenen Figuren gleiche oder gleichwirkende Merkmale.

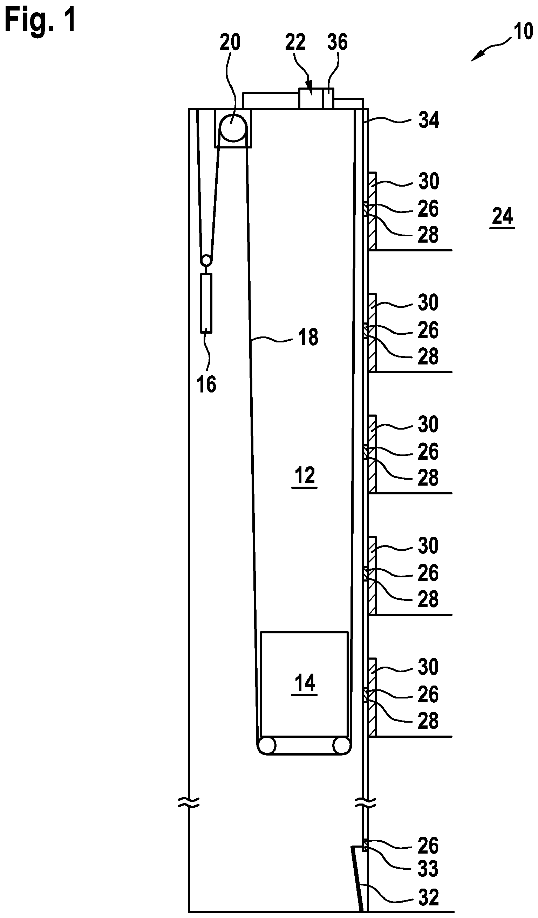

Fig. 1 zeigt eine gebäudegebundene Personenbeförderungsanlage 10 in der Form einer Aufzuganlage 10. Im Folgenden wird beispielhaft eine Aufzuganlage beschrieben. Es ist aber zu verstehen, dass auch andere Personenbeförderungsanlagen 10, wie etwa Fahrtreppen oder Fahrsteige, ein Sicherheitsgerät aufweisen können, so wie es im Folgenden beschrieben wird.

Die Aufzuganlage 10 umfasst einen Aufzugschacht 12, in dem eine Aufzugskabine 14 und ein Gegengewicht 16 verfahren werden können. Die Aufzugskabine 14 und das Gegengewicht 16 sind hierzu an einem seil- oder riemenartigen Tragmittel 18 gehalten, welches von einer Antriebsmaschine 20 verlagert werden kann. Der Betrieb der Aufzuganlage 10 und insbesondere die Antriebsmaschine 20 kann mithilfe einer zentralen Steuereinheit 22 gesteuert werden.

Um eine korrekte Funktion und insbesondere eine Sicherheit der Aufzuganlage 10 gewährleisten zu können, sind in einem die Aufzuganlage 10 aufnehmenden Bauwerk 24 mehrere Sicherheitssensoren 26 aufgenommen. Die Sicherheitssensoren 26 sind dabei über das Bauwerk 24 hin verteilt angeordnet. Die Sicherheitssensoren 26 können beispielsweise einen Türschalter 28 umfassen bzw. mit einem Türschalter 28 verbunden sein, welche einen Schliesszustand von Türen 30, insbesondere von Stockwerktüren, der Aufzuganlage 10 überwachen können. Beispielsweise nahe einem Boden oder einer Grube des Aufzugschachts 12 kann ferner eine Leiter 32 gelagert sein, deren korrekt aufgeräumte Positionierung an einer Seitenwand des Aufzugschachts 12 beispielsweise mithilfe eines mit einem Sicherheitssensor 26 verbundenen Schalters 33 überwacht wird.

Die Sicherheitssensoren 26 können beispielsweise über einen seriellen Bus 34 mit einem Sicherheitsgerät 36 verbunden sein, das basierend auf den Signalen der Sicherheitssensoren 26 ein Warnsignal erzeugt, wenn die Signale darauf hindeuten, dass ein Sicherheitsproblem vorliegt. Wenn die Steuerung 22 ein Warnsignal empfängt, kann sie beispielsweise den Betrieb der Aufzuganlage 10 einstellen bzw. verhindern, dass diese den Betrieb aufnimmt.

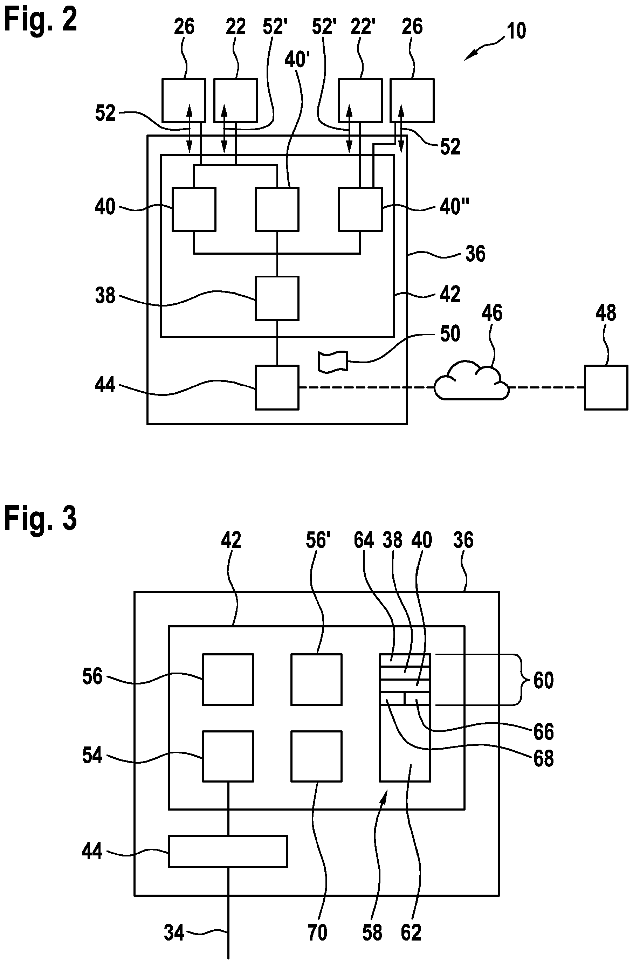

Die Fig. 2 zeigt einen funktionalen Aufbau eines Sicherheitsgeräts 36, in dem mehrere Softwaremodule, wie ein Aktualisierungsmodul 38 und ein oder mehrere Sicherheitsmodule 40, 40', 40", von einem Mikrocontroller 42 ausgeführt werden. Das Sicherheitsgerät 36 kann mittels einer Datenkommunikationseinheit 44 Daten austauschen, die beispielsweise über das Internet 46 von einem Bereitsteller 48, beispielsweise einem Internet-Server, bereitgestellt werden. Insbesondere kann der Bereitsteller ein Softwarepaket 50 für eines oder mehrere der Sicherheitsmodule 40, 40`, 40" bereitstellen, das von dem Aktualisierungsmodul 38 mittels der Datenkommunikationseinheit 44 heruntergeladen und eventuell entschlüsselt werden kann. Das Aktualisierungsmodul 38 kann dann die Daten aus dem Softwarepaket 50 dazu verwenden, eines oder mehrere der Sicherheitsmodule 40, 40', 40" zu aktualisieren.

Die Datenkommunikationseinheit 44 kann beispielsweise ein Router oder eine Mobilfunkeinheit sein, die über ein LAN (local area network) mit dem Sicherheitsgerät 36 verbunden ist oder in dieses integriert ist.

Die Sicherheitsmodule 40, 40`, 40" führen sicherheitsrelevante Funktionen der Personenbeförderungsanlage 10 durch. Dabei empfangen sie sicherheitsrelevante Signale 52 von den Sicherheitssensoren 26 und stellen der zentralen Steuerung 22 ein Warnsignal 52` bereit. Es ist möglich, dass redundante Sicherheitsmodule 40, 40' vorhanden sind, die das Warnsignal 52` für die zentrale Steuerung 22 erzeugen. Beispielsweise können sich redundante Sicherheitsmodule 40, 40` gegenseitig auf Funktionsstörungen überwachen. Beispielsweise kann der gleiche Softwarecode auf unterschiedlichen Kernen des Mikrocontrollers 42 als redundante Sicherheitsmodule 40, 40' ausgeführt werden. Weiter ist möglich, dass ein weiteres Sicherheitsmodul 40" ein weiteres Warnsignal 52` für eine weitere Steuerung 22' der Personenbeförderungsanlage 10 erzeugt. Beispielsweise könnte eine Aufzuganlage mit mehreren Antrieben 20 mehrere Steuerungen 22, 22` aufweisen, die alle gestoppt werden sollten, wenn ein Sicherheitssensor 26 Probleme meldet.

Die verschiedenen Softwaremodule, wie die Sicherheitsmodule 40, 40', 40"und das Aktualisierungsmodul 38, können in dem Mikrokontroller 42 voneinander abgeschirmt werden. Dies kann dadurch geschehen, dass manche oder alle der Softwaremodule eigene Speicherbereiche zugewiesen bekommen, auf die andere Softwaremodule keinen Zugriff erhalten und/oder indem die Datenkommunikation zwischen den Softwaremodulen eingeschränkt wird.

Die Fig. 3 zeigt ein Sicherheitsgerät 36 und insbesondere dessen Mikrocontroller 42 detaillierter. Das Sicherheitsgerät 36 kann eine Datenkommunikationseinheit 44 umfassen, mit der Daten über den seriellen Bus 34 empfangen und gesendet werden können. Diese Daten können das Softwarepaket 50, die sicherheitsrelevanten Signale 52 von den Sicherheitssensoren 26 und das Warnsignal 52` an die zentrale Steuerung 22 umfassen.

Der Mikrocontroller 42 umfasst eine Kommunikationsschnittstelle 54, über die der Mikrocontroller mit der Datenkommunikationseinheit 44 Daten austauschen kann. Weiter kann der Mikrocontroller 42 mehrere Prozessorkerne 56, 56` umfassen. Die Softwaremodule 38, 40, 40', 40" können auf einem oder mehreren dieser Prozessorkerne 56, 56` ausgeführt werden.

Der Mikrocontroller 42 umfasst weiter einen Speicher 58, der aus einem nicht-flüchtigen Speicher 60 und einem flüchtigen Speicher 62 aufgebaut sein kann. Im nicht-flüchtigen Speicher 60 gespeicherte Daten bleiben gespeichert, wenn das Sicherheitsgerät 36 bzw. der Mikrocontroller 42 nicht mehr mit Strom versorgt wird. Die im flüchtigen Speicher 62 gespeicherten Daten können dabei verloren gehen.

Beispielsweise kann der nicht-flüchtige Speicher 60 ein geschützter Speicher sein, der nur mit einem mechanischen Eingriff im Sicherheitsgerät 36 (wie etwa Öffnen eines Gehäuses) verändert werden kann.

In dem nicht-flüchtigen Speicher 60 können ein Bootloader 64, das Aktualisierungsmodul 38 und ein oder mehrere Sicherheitsmodule 40 gespeichert sein. Mit dem Bootloader 64, der beim Start des Sicherheitsgeräts 36 aufgerufen werden kann, kann das Aktualisierungsmodul 38, das in verschlüsselter Form in dem nicht-flüchtigen Speicher 60 gespeichert ist, entschlüsselt werden.

In dem nicht-flüchtigen Speicher 60 kann sich weiter ein privater Schlüssel 66 für das Sicherheitsgerät 36 und/oder ein öffentlicher Schlüssel 68 des Bereitstellers 48 des Softwarepakets 50 befinden. Es ist möglich, dass lediglich, also nur die Speicherbereiche, in denen der Bootloader 64 und die Schlüssel 66, 68 abgelegt sind, wie oben beschrieben geschützt sind.

Mit dem privaten Schlüssel 66 kann das Aktualisierungsmodul 38 entschlüsselt werden. Mit dem öffentlichen Schlüssel 68 kann beispielsweise der Bereitsteller 48 authentisiert werden, wenn eine Datenkommunikation mit ihm aufgebaut wird.

Der Mikrocontroller 42 ist nun derart konfiguriert, dass das Sicherheitsmodul 40 lediglich, also nur durch das Aktualisierungsmodul 38 abänderbar ist. Auf diese Weise kann ein unbeabsichtigtes oder unautorisiertes Ändern des Sicherheitsmoduls 40 verhindert oder zumindest erschwert werden. Im Folgenden ist nur noch von dem Sicherheitsmodul 40 die Rede. Es ist zu verstehen, dass aber auch immer die anderen Sicherheitsmodule 40', 40" gemeint sein können.

Eine mögliche Konfiguration des Mikrocontrollers 42 ist, dass das Sicherheitsmodul 40 auf dem ersten Prozessorkern 56 ausgeführt wird und dass das Aktualisierungsmodul 38 auf dem zweiten Prozessorkern 56` ausgeführt wird, wobei der Zugriff des zweiten Prozessorkerns 56` auf Bereiche des Speichers 58 beschränkt ist, in denen das Sicherheitsmodul 40 gespeichert ist. Dies kann beispielsweise dadurch erreicht werden, dass jedem der Prozessorkerne 56, 56` ein eigener exklusiver Speicherbereich zugeordnet ist, auf den der andere Prozessorkern 56, 56` keinen Zugriff hat.

Der Mikrocontroller 42 kann weiter einen Hypervisor 70 aufweisen, der einen Zugriff von den ausgeführten Softwaremodulen 38, 40 auf den Speicher 58 beschränkt. Der Hypervisor 70 kann eine Hardware-Komponente des Mikrocontrollers 42 sein. Es ist aber auch möglich, dass der Hypervisor 70 ein Softwaremodul ist, das in dem Speicher 58 gespeichert ist. Der Hypervisor 70 kann derart konfiguriert werden, dass er Zugriffe von Softwaremodulen 38, 40 auf den Speicher 58 und/oder eine Datenkommunikation der Softwaremodule 38, 40 untereinander und/oder mit der Kommunikationsschnittstelle 54 beschränkt.

Beispielsweise kann der Hypervisor 70 einen Zugriff des Aktualisierungsmoduls 38 auf Bereiche des Speichers 58 beschränken, in denen das Sicherheitsmodul 40 gespeichert ist.

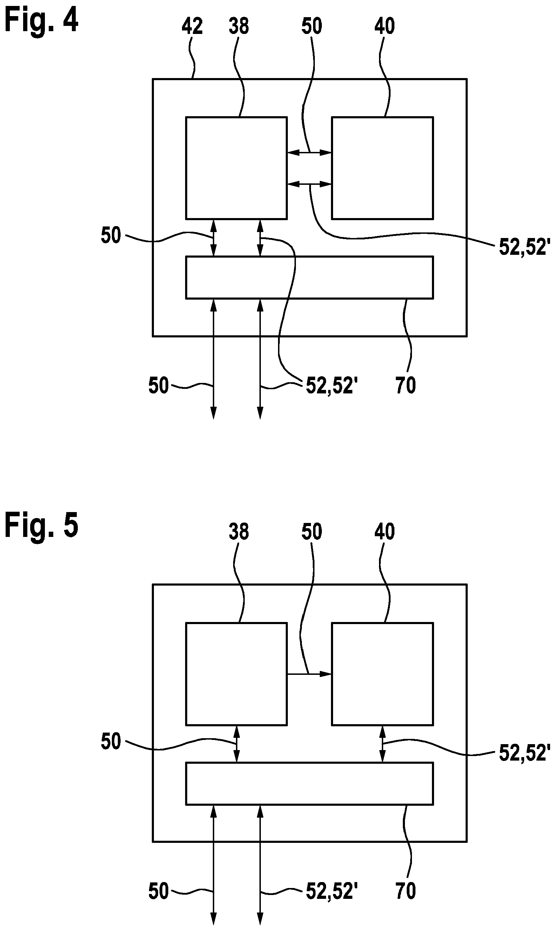

Die Fig. 4 und 5 zeigen Ausführungsformen des Mikrocontrollers 42, bei dem die Kommunikation zwischen den Softwaremodulen 38, 40 durch den Hypervisor 70 beschränkt wird. Es ist zu verstehen, dass die Softwaremodule 38, 40 im gleichen oder in verschiedenen Prozessorkernen ausgeführt werden können und/oder dass auch die Speicherbereiche, auf die sie Zugriff haben, beschränkt werden können.

Die Fig. 4 zeigt ein Beispiel eines Mikrocontrollers 42, bei dem die externe Kommunikation mittels des Hypervisors 70 auf das Aktualisierungsmodul 38 beschränkt ist. Der Hypervisor 70 leitet die komplette Kommunikation über die Kommunikationsschnittstelle54 an das Aktualisierungsmodul 38 weiter. Ausserdem verhindert der Hypervisor 70 eine Kommunikation des Sicherheitsmoduls 40 über die Kommunikationsschnittstelle. Das Aktualisierungsmodul 38 empfängt die sicherheitsrelevanten Signale 52 und leitet diese an das Sicherheitsmodul 40 weiter. Umgekehrt sendet das Sicherheitsmodul 40 das Warnsignal 52` an das Aktualisierungsmodul 38, das das Warnsignal 52` über die Kommunikationsschnittstelle 54 weiterleitet. Zusätzlich kann das Aktualisierungsmodul 38 mit den Daten aus dem Softwarepaket 50 das Sicherheitsmodul 40 aktualisieren.

Bei dem Beispiel der Fig. 5 beschränkt der Hypervisor die Kommunikation des jeweiligen Softwaremoduls 38, 40 auf die Daten, die es senden und empfangen darf. Der Hypervisor 70 leitet die sicherheitsrelevanten Signale 52 von den Sensoren 26 der Personentransportanlage 10 an das Sicherheitsmodul 40 weiter und leitet auch das Warnsignal 52` an die Kommunikationsschnittstelle 54 weiter. Ausserdem leitet der Hypervisor 70 das Softwarepaket 50 an das Aktualisierungsmodul 38 weiter. Es ist nicht möglich, dass das Aktualisierungsmodul ein Warnsignal 52 erzeugt. Das Aktualisierungsmodul 38 kann mit den Daten aus dem Softwarepaket 50 das Sicherheitsmodul 40 aktualisieren. Es ist aber nicht möglich, dass das Sicherheitsmodul 40 Daten oder Code des Aktualisierungsmoduls 38 abändert.

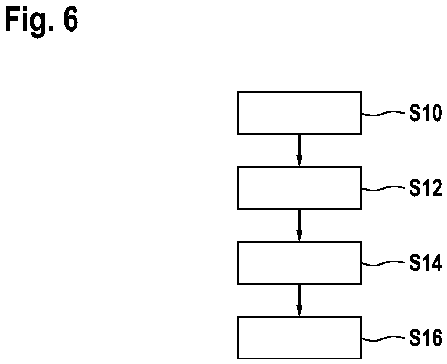

Die Fig. 6 zeigt ein Flussdiagramm für ein Verfahren zum Aktualisieren von Software eines Sicherheitsgeräts 36, so wie es beispielweise in den vorhergehenden Figuren gezeigt ist.

In Schritt S10 fragt das Aktualisierungsmodul 38 bei dem Bereitsteller 48 über die externe Schnittstelle regelmässig ab, ob das Softwarepaket 50 vorhanden ist. Beispielsweise kann dies einmal am Tag geschehen. Dabei kann auch der Bereitsteller 48 der aktualisierten Software 50 authentisiert werden, d.h., es kann überprüft werden, ob der Bereitsteller 48 wirklich der ist, von dem das Softwarepaket 50 angefordert werden soll. Die Authentisierung kann beispielsweise mit dem öffentlichen Schlüssel 66 erfolgen.

Beispielsweise kann der Bereitsteller 48 ein Server sein, der von einem Hersteller und/oder Wartungsverantwortlichen für die Anlage 10 für Software-Aktualisierungen bereitgestellt wird.

Liegt eine aktualisierte Software vor, wird im Schritt S12 ein entsprechendes Softwarepaket 50 von dem Aktualisierungsmodul 38 über die Kommunikationsschnittstelle 54 empfangen. Beispielsweise kann zunächst ein Header des Softwarepakets 50 empfangen werden, in dem Informationen über den Umfang der zu aktualisierenden Software abgelegt sind. Es ist möglich, dass nicht die gesamte Software, sondern lediglich, also nur Teile davon aktualisiert werden sollen. Dies kann in dem Header gespeichert sein.

Es ist weiter möglich, dass das Softwarepaket 50 und/oder die aktualisierte Software mit einem symmetrischen Verschlüsselungsverfahren verschlüsselt sind. Der zugehörige temporäre Schlüssel kann dazu mittels der beiden Schlüssel 66, 68 ermittelt werden.

Ist das Softwarepaket 50 bzw. Teile davon verschlüsselt, nimmt das Aktualisierungsmodul 38 im Schritt S14 die Entschlüsselung vor.

Im Schritt S 16 wird die zu aktualisierende Software des Sicherheitsmoduls 40 von dem Aktualisierungsmodul ersetzt. Dabei können die entsprechenden Speicherbereiche des nicht-flüchtigen Speichers 60 überschrieben werden.

Abschliessend ist darauf hinzuweisen, dass Begriffe wie "aufweisend", "umfassend" etc. keine anderen Elemente oder Schritte ausschliessen und Begriffe wie "eine" oder "ein" keine Vielzahl ausschliessen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele im Schutzumfang der beigefügten Ansprüche verwendet werden können. Bezugszeichen in den Ansprüchen sind nicht als Einschränkung anzusehen.

## Patentansprüche

1. Sicherheitsgerät für eine gebäudegebundene Personentransportanlage (10),
wobei das Sicherheitsgerät (36) einen Mikrocontroller (42) mit einem Speicher (58), einem Prozessor (56, 56') und einer Kommunikationsschnittstelle (54) umfasst;
wobei in dem Speicher (58) ein Sicherheitsmodul (40) gespeichert ist;
wobei in dem Speicher (58) ein Aktualisierungsmodul (38) gespeichert ist, das, wenn es auf dem Prozessor (56, 56') ausgeführt wird, ein Softwarepaket (50) über die Kommunikationsschnittstelle (54) empfängt und zumindest Teile des Sicherheitsmoduls (40) mit dem Softwarepaket (50) aktualisiert;
wobei der Mikrocontroller (42) derart konfiguriert ist, dass das Sicherheitsmodul (40) lediglich, also nur durch das Aktualisierungsmodul (38) abänderbar ist;
**dadurch gekennzeichnet, dass**
das Sicherheitsmodul (40), wenn es auf dem Prozessor (56, 56') ausgeführt wird, sicherheitsrelevante Signale (52) von Komponenten (26) der Personentransportanlage (10) empfängt, diese hinsichtlich eines Sicherheitsproblems auswertet und im Falle eines Sicherheitsproblems ein Warnsignal (52') an eine Steuerung (22) der Personentransportanlage (10) sendet,
dass der Prozessor einen ersten Prozessorkern (56) aufweist, auf dem das Sicherheitsmodul (40) ausgeführt wird;
dass der Prozessor einen zweiten Prozessorkern (56') aufweist, auf dem das Aktualisierungsmodul (38) ausgeführt wird;
und dass der Zugriff des zweiten Prozessorkerns (56') auf Bereiche des Speichers (58) beschränkt ist, in denen das Sicherheitsmodul (40) gespeichert ist.

2. Sicherheitsgerät nach Anspruch 1,
wobei der Mikrocontroller (42) einen Hypervisor (70) umfasst, der einen Zugriff von ausgeführten Softwaremodulen (38, 40) auf den Speicher (58) beschränkt;
wobei der Hypervisor (70) einen Zugriff des Aktualisierungsmoduls (38) auf Bereiche des Speichers beschränkt, in denen das Sicherheitsmodul (40) gespeichert ist.

3. Sicherheitsgerät nach Anspruch 2,
wobei der Hypervisor (70) eine Hardware-Komponente des Mikrocontrollers (42) ist.

4. Sicherheitsgerät nach Anspruch 2,
wobei der Hypervisor (70) ein Softwaremodul ist, das in dem Speicher (58) gespeichert ist.

5. Sicherheitsgerät nach einem der Ansprüche 2 bis 4,
wobei der Hypervisor (70) dazu ausgeführt ist, die sicherheitsrelevanten Signale (52) von Komponenten (26) der Personentransportanlage (10) an das Sicherheitsmodul (40) weiterzuleiten und das Softwarepaket (50) an das Aktualisierungsmodul (38) weiterzuleiten.

6. Sicherheitsgerät nach einem der Ansprüche 1 bis 5,
wobei das Aktualisierungsmodul (38) die sicherheitsrelevanten Signale (52) über die Kommunikationsschnittstelle (54) empfängt und an das Sicherheitsmodul (40) weiterleitet.

7. Sicherheitsgerät nach einem der vorhergehenden Ansprüche,
wobei in dem Speicher (58) mehrere Sicherheitsmodule (40, 40', 40") gespeichert sind;
wobei das Aktualisierungsmodul (38) dazu ausgeführt ist, diese Sicherheitsmodule (40, 40', 40") zu aktualisieren.

8. Sicherheitsgerät nach einem der vorhergehenden Ansprüche,
wobei der Speicher (58) einen nicht-flüchtigen Speicher (60) und einen flüchtigen Speicher (62) umfasst.

9. Sicherheitsgerät nach Anspruch 8,
wobei das Aktualisierungsmodul (38) in dem nicht-flüchtigen Speicher (60) in verschlüsselter Form gespeichert ist;
wobei in dem nicht-flüchtigen Speicher (60) ein Bootloadermodul (64) gespeichert ist, das, wenn es auf dem Prozessor (56, 56') ausgeführt wird, das Aktualisierungsmodul (38) entschlüsselt und in den flüchtigen Speicher (62) lädt.

10. Sicherheitsgerät nach einem der vorhergehenden Ansprüche,
wobei ein privater Schlüssel (66) für das Sicherheitsgerät (36) in einem geschützten nicht-flüchtigen Speicher (60) des Mikrocontrollers (42) abgelegt ist; und/oder
wobei ein öffentlicher Schlüssel (68) eines Bereitstellers (48) des Softwarepakets (50) in einem geschützten nicht-flüchtigen Speicher (60) des Mikrocontrollers (42) abgelegt ist.

11. Verfahren zum Aktualisieren von Software eines Sicherheitsgeräts (36) nach einem der vorhergehenden Ansprüche, das Verfahren umfassend:
Authentisieren eines Bereitstellers (48) des Softwarepakets (50) über die Kommunikationsschnittstelle (54) durch das Aktualisierungsmodul (38);
Empfangen des Softwarepakets (50) über die Kommunikationsschnittstelle (54) durch das Aktualisierungsmodul (38);
Aktualisieren (S16) zumindest eines Teils des Sicherheitsmoduls (40) mit dem Softwarepaket (50) durch das Aktualisierungsmodul (38).

12. Verfahren nach Anspruch 11, weiter umfassend:
Entschlüsseln (S14) des Softwarepakets (50) durch das Aktualisierungsmodul (38).

13. Verfahren nach Anspruch 12,
wobei das Softwarepaket (50) zumindest teilweise mit einem symmetrischen Verschlüsselungsverfahren verschlüsselt ist.

14. Verfahren nach einem der Ansprüche 11 bis 13, weiter umfassend:
regelmässiges Anfragen (S10) nach einem Softwarepaket (50) zum Aktualisieren des Sicherheitsmoduls (40) durch das Aktualisierungsmodul (38) bei dem Bereitsteller (48).

## Claims

1. Safety device for a building-related passenger transport system (10),
the safety device (36) comprising a microcontroller (42) having a memory (58), a processor (56, 56'), and a communication interface (54);
a safety module (40) being stored in the memory (58);
an update module (38) being stored in the memory (58) which, when it is executed on the processor (56, 56'), receives a software package (50) via the communication interface (54) and updates at least parts of the safety module (40) with the software package (50); the microcontroller (42) being configured in such a way that the safety module (40) is able to be amended only, i.e. solely, by the update module (38);
**characterized**
**in that** when the safety module (40) is executed on the processor (56, 56'), it receives safety-relevant signals (52) from components (26) of the passenger transport system (10), evaluates them with regard to a safety problem, and transmits a warning signal (52') to a controller (22) of the passenger transport system (10) in the event of a safety problem,
**in that** the processor has a first processor core (56) on which the safety module (40) is executed;
**in that** the processor has a second processor core (56') on which the update module (38) is executed;
**and in that** the access of the second processor core (56') is restricted to regions of the memory (58) in which the safety module (40) is stored.

2. Safety device according to claim 1,
wherein the microcontroller (42) comprises a hypervisor (70) which restricts access of executed software modules (38, 40) to the memory (58);
wherein the hypervisor (70) restricts access of the update module (38) to regions of the memory in which the safety module (40) is stored.

3. Safety device according to claim 2,
wherein the hypervisor (70) is a hardware component of the microcontroller (42).

4. Safety device according to claim 2,
wherein the hypervisor (70) is a software module stored in the memory (58).

5. Safety device according to any of claims 2 to 4,
wherein the hypervisor (70) is designed to forward the safety-relevant signals (52) from components (26) of the passenger transport system (10) to the safety module (40) and to forward the software package (50) to the update module (38).

6. Safety device according to any of claims 1 to 5,
wherein the update module (38) receives the safety-relevant signals (52) via the communication interface (54) and forwards them to the safety module (40).

7. Safety device according to any of the preceding claims,
wherein a plurality of safety modules (40, 40', 40") are stored in the memory (58);
wherein the update module (38) is designed to update these safety modules (40, 40', 40").

8. Safety device according to any of the preceding claims,
wherein the memory (58) comprises a non-volatile memory (60) and a volatile memory (62).

9. Safety device according to claim 8,
wherein the update module (38) is stored in the non-volatile memory (60) in encrypted form;
wherein a boot loader module (64) is stored in the non-volatile memory (60) which, when it is executed on the processor (56, 56'), decrypts the update module (38), and loads it into the volatile memory (62).

10. Safety device according to any of the preceding claims,
wherein a private key (66) for the safety device (36) is stored in a protected non-volatile memory (60) of the microcontroller (42); and/or
wherein a public key (68) of a provider (48) of the software package (50) is stored in a protected non-volatile memory (60) of the microcontroller (42).

11. Method for updating software of a safety device (36) according to any of the preceding claims, the method comprising:
authenticating a provider (48) of the software package (50) via the communication interface (54) by the update module (38);
receiving the software package (50) via the communication interface (54) by the update module (38);
updating (S16) at least a part of the safety module (40) with the software package (50) by the update module (38).

12. Method according to claim 11, further comprising:
decrypting (S14) the software package (50) by the update module (38).

13. Method according to claim 12,
wherein the software package (50) is at least partially encrypted using a symmetric encryption method.

14. Method according to any of claims 11 to 13, further comprising:
regular requests (S10) for a software package (50) for updating the safety module (40) by the update module (38) from the provider (48).

## Revendications

1. Appareil de sécurité destiné à un système de transport de personnes (10) lié à un bâtiment,
dans lequel l'appareil de sécurité (36) comprend un microcontrôleur (42) comportant une mémoire (58), un processeur (56, 56') et une interface de communication (54) ;
dans lequel un module de sécurité (40) est mémorisé dans la mémoire (58) ;
dans lequel un module de mise à jour (38) est mémorisé dans la mémoire (58), lequel, lorsqu'il est exécuté sur le processeur (56, 56'), reçoit un progiciel (50) par l'intermédiaire de l'interface de communication (54) et met à jour au moins des parties du module de sécurité (40) avec le progiciel (50) ;
dans lequel le microcontrôleur (42) est configuré de telle sorte que le module de sécurité (40) peut uniquement, c'est-à-dire seulement, être modifié par le module de mise à jour (38) ;
**caractérisé en ce que**
le module de sécurité (40), lorsqu'il est exécuté sur le processeur (56, 56'), reçoit des signaux relatifs à la sécurité (52) de composants (26) du système de transport de personnes (10), évalue lesdits signaux en ce qui concerne un problème de sécurité et, en cas de problème de sécurité, envoie un signal d'avertissement (52') à une commande (22) du système de transport de personnes (10),
**en ce que** le processeur présente un premier noyau de processeur (56) sur lequel le module de sécurité (40) est exécuté ;
**en ce que** le processeur présente un second noyau de processeur (56`) sur lequel le module de mise à jour (38) est exécuté ;
**et en ce que** l'accès du second noyau de processeur (56') est restreint à des zones de la mémoire (58) dans lesquelles le module de sécurité (40) est mémorisé.

2. Appareil de sécurité selon la revendication 1,
dans lequel le microcontrôleur (42) comprend un hyperviseur (70) qui restreint un accès des modules logiciels (38, 40) exécutés à la mémoire (58) ;
dans lequel l'hyperviseur (70) restreint un accès du module de mise à jour (38) à des zones de la mémoire dans lesquelles le module de sécurité (40) est mémorisé.

3. Appareil de sécurité selon la revendication 2,
dans lequel l'hyperviseur (70) est un composant matériel du microcontrôleur (42).

4. Appareil de sécurité selon la revendication 2,
dans lequel l'hyperviseur (70) est un module logiciel qui est mémorisé dans la mémoire (58).

5. Appareil de sécurité selon l'une des revendications 2 à 4,
dans lequel l'hyperviseur (70) est exécuté pour transmettre les signaux relatifs à la sécurité (52) de composants (26) du système de transport de personnes (10) au module de sécurité (40) et pour transmettre le progiciel (50) au module de mise à jour (38).

6. Appareil de sécurité selon l'une des revendications 1 à 5,
dans lequel le module de mise à jour (38) reçoit les signaux relatifs à la sécurité (52) par l'intermédiaire de l'interface de communication (54) et les transmet au module de sécurité (40).

7. Appareil de sécurité selon l'une des revendications précédentes,
dans lequel plusieurs modules de sécurité (40, 40', 40") sont mémorisés dans la mémoire (58) ;
dans lequel le module de mise à jour (38) est exécuté pour mettre à jour lesdits modules de sécurité (40, 40', 40").

8. Appareil de sécurité selon l'une des revendications précédentes,
dans lequel la mémoire (58) comprend une mémoire non volatile (60) et une mémoire volatile (62).

9. Appareil de sécurité selon la revendication 8,
dans lequel le module de mise à jour (38) est mémorisé dans la mémoire non volatile (60) sous forme chiffrée ;
dans lequel un module d'amorçage (64) est mémorisé dans la mémoire non volatile (60), lequel, lorsqu'il est exécuté sur le processeur (56, 56'), déchiffre le module de mise à jour (38) et le charge dans la mémoire volatile (62).

10. Appareil de sécurité selon l'une des revendications précédentes,
dans lequel une clé privée (66) pour l'appareil de sécurité (36) est enregistrée dans une mémoire non volatile (60) protégée du microcontrôleur (42) ; et/ou
dans lequel une clé publique (68) d'un fournisseur (48) du progiciel (50) est enregistrée dans une mémoire non volatile (60) protégée du microcontrôleur (42).

11. Procédé permettant la mise à jour d'un logiciel d'un appareil de sécurité (36) selon l'une des revendications précédentes, le procédé comprenant :
l'authentification d'un fournisseur (48) du progiciel (50) par le module de mise à jour (38) par l'intermédiaire de l'interface de communication (54) ;
la réception du progiciel (50) par le module de mise à jour (38) par l'intermédiaire de l'interface de communication (54) ;
la mise à jour (S16) par le module de mise à jour (38) d'au moins une partie du module de sécurité (40) avec le progiciel (50).

12. Procédé selon la revendication 11, comprenant en outre :
le déchiffrage (S14) du progiciel (50) par le module de mise à jour (38).

13. Procédé selon la revendication 12,
dans lequel le progiciel (50) est au moins partiellement chiffré avec un procédé de chiffrement symétrique.

14. Procédé selon l'une des revendications 11 à 13, comprenant en outre :
la demande régulière (S10), par le module de mise à jour (38) auprès du fournisseur (48), d'un progiciel (50) pour la mise à jour du module de sécurité (40).
